# EUROPEAN PATENT SPECIFICATION

(11) **EP 4 535 239 B1**
(45) Date of publication and mention of the grant of the patent: **09.12.2026**
(21) Application number: 25151210.9
(22) Date of filing: 27.05.2022
(51) Int. Cl.: G06N 3/045, G06N 3/0455, G06N 3/0464, G06N 3/0895, G06N 3/08, G06N 3/09

(54) **CONTINUAL LEARNING NEURAL NETWORK SYSTEM TRAINING FOR CLASSIFICATION TYPE TASKS**
TRAINIEREN EINES KONTINUIERLICHEN LERNENDEN NEURONALEN NETZWERKSYSTEMS FÜR KLASSIFIZIERUNGSAUFGABEN
ENTRAÎNEMENT DE SYSTÈME DE RÉSEAU NEURONAL À APPRENTISSAGE CONTINU POUR DES TÂCHES DE TYPE CLASSIFICATION

(30) Priority: 27.05.2021 US 202163194056 P
(43) Date of publication of application: 09.04.2025
(62) Document number(s) of the earlier application(s) in accordance with Art. 76 EPC: 22733874.6 / 4 288 910
(73) Proprietor: GDM Holding LLC, Mountain View, CA 94043 (US)
(72) Inventor: SHANAHAN, Murray, London, N1C 4AG (GB)
(74) Representative: Marks & Clerk GST

(56) References cited:
- WO-A1-2018/085643
- RAHAF ALJUNDI ET AL: "Expert Gate: Lifelong Learning with a Network of Experts", IEEE CONFERENCE ON COMPUTER VISION AND PATTERN RECOGNITION (CVPR 2017), 21 July 2017 (2017-07-21), pages 7120 - 7129, XP055586250, ISBN: 978-1-5386-0457-1, DOI: 10.1109/CVPR.2017.753
- LI ZHIZHONG ET AL: "Learning without Forgetting", IEEE TRANSACTIONS ON PATTERN ANALYSIS AND MACHINE INTELLIGENCE, IEEE COMPUTER SOCIETY, USA, vol. 40, no. 12, 1 December 2018 (2018-12-01), pages 2935 - 2947, XP011698759, ISSN: 0162-8828, [retrieved on 20181101], DOI: 10.1109/TPAMI.2017.2773081

## Description

### BACKGROUND

This specification relates to a training of a neural network system in a continual learning setting. The neural network system can be trained to perform classification-type tasks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Aljundi et al. "Expert Gate: Lifelong Learning with a Network of Experts", IEEE Conference on Computer Vision and Pattern Recognition (CVPR 2017), 21 July 2017, pages 7120-7129, describes a system that implements a task recognizer is implemented using an undercomplete autoencoder as a gating mechanism. Each autoencoder is trained along with a corresponding expert model. The autoencoder with the lowest reconstruction error is used like a switch, selecting the corresponding expert model and deciding which specialist model to transfer knowledge from when learning a new task. WO2018/085643 describes a neural network that includes a Mixture of Experts subnetwork, and which combines the expert outputs in accordance with weights for the selected experts. Zhizhong et al. "Learning without Forgetting", IEEE Transactions on Pattern Analysis and Machine Intelligence, vol. 40 (12), 1 December 2018, describes a technique for using new task data to train a neural network while preserving the original capabilities.

### SUMMARY

The invention is set out in the independent claims; further aspects are defined in the dependent claims.

This specification describes a system implemented as computer programs on one or more computers in one or more locations for training a neural network-based system. In general the neural network-based system is trained to perform classification-type tasks. The system may be a continual learning system in that the system can continuously learn to perform new tasks as they arise or adapt to a change in the data distribution. The training however does not require detection or knowledge of task boundaries as with some prior art continual learning methods.

According to an aspect, there is provided a computer-implemented method for training a neural network-based system. The method comprises receiving a training data item and target data associated with the training data item. The training data item is processed using an encoder to generate an encoding of the training data item. A subset of neural networks is selected from a plurality of neural networks stored in a memory based upon the encoding. The plurality of neural networks are configured to process the encoding to generate output data indicative of a classification of an aspect of the training data item. The encoding is processed using the selected subset of neural networks to generate the output data. An update is determined to the parameters of the selected subset of neural networks based upon a loss function comprising a relationship between the generated output data and the target data associated with the training data item. The parameters of the selected subset of neural networks are updated based upon the determined update.

The training method further comprises repeating the above described steps for a plurality of training data items. The plurality of training data items comprises a first training data item drawn from a first data distribution and a second training data item drawn from a second data distribution, and wherein the first and second data distributions are different. For example, the training method may use training data items associated with a first task or sub-task and training data items associated with a second task or sub-task. Thus, the neural network-based system can be trained to perform both tasks or sub-tasks or adapt to a change in the data distribution.

The plurality of training data items comprises training data items drawn from the first data distribution interspersed with training data items drawn from the second data distribution. That is, there is not a clear boundary between the change in data distribution or change in task or sub-task; the change in the data distribution or task/sub-task is gradual. The change is implemented by drawing training data items associated with different data distributions/tasks/sub-tasks according to a particular probability distribution conditioned on training time. For example, training data items may be drawn from a first data distribution with a peak probability at time t1, training data items may be drawn from a second data distribution with a peak probability at time t2 and so on, with a temporal overlap in the probability distributions for selecting training data items from either of the first or second data distributions. The probability distributions may be Gaussian distributions. The training method can also be used in an incremental learning setting whereby the training data items are presented sequentially one complete task/sub-task/class at a time.

As noted above, the neural network-based system can be trained to perform classification type tasks. For example, where the training data item is image data, the neural network-based system can be trained for objection classification, that is to predict or determine an object that is present in the image data. In another example, the task may be object detection, that is, to determine whether an aspect of the image data, such as a pixel or region, is part of an object. Another image-based task may be pose estimation of an object. The training data item may be a video data item. Possible video tasks include action recognition, that is, to determine what action is being performed in a video or a segment (aspect) of a video, and action detection to determine whether an action is being performed in a segment of video. The training data item may be an audio data item. Possible audio tasks include speech recognition and speaker recognition amongst others.

The relationship between the generated output data and the target data for the training data item may be based upon a dot product between the generated output data and the target data. The loss function may be the negative of the dot product between the generated output data and the target data (depending on whether minimization or maximization is used for training). Compared to conventional methods, the loss function may not require a normalization term, the raw values from the dot product may be used.

The target data may be in the form of a one-hot vector. That is, a vector whereby the element corresponding to the correct class/selection is set to 1 and all other elements set to 0. Where the loss function is based upon a dot-product between a one-hot vector and the output data, this means that only the parameters of the neural networks on the path to the neuron representing the correct class are altered during training. The parameters for paths associated with incorrect classes are not altered. These paths for incorrect classes may be important for previously learned data/tasks/sub-tasks. This helps to mitigate against "catastrophic forgetting" whereby performance on earlier learned data/tasks/sub-tasks degrade in favor of newer data/tasks/sub-tasks. In the context of catastrophic forgetting, it has been observed that helpful updates generally outpace unhelpful updates for a single neural network. By providing a plurality of neural networks, this general statistical trend can be amplified and further mitigates against catastrophic forgetting.

The encoder may be pre-trained using a dataset different to the dataset that the training data item belongs to. In one example, the encoder is pre-trained on the Omniglot dataset whereas the training data items may belong to the MNIST dataset. In another example, the encoder may be pre-trained on the ImageNet dataset and the training data items may belong to one of the CIFAR family of datasets.

The encoder may be pre-trained using a self-supervised learning technique. The self-supervised learning technique may comprise training based upon transformed views of training data items. For example, the training may be based upon instance discrimination and discriminating between positive and negative pairs of transformed versions of data items. Further details may be found in Mitrovic et al., "Representation learning via invariant causal mechanisms," arXiv: 2010.07922, available at https://arxiv.org/abs/2010.07922 and Chen et al., "A simple framework for contrastive learning of visual representations," arXiv: 2002.05709, available at https://arxiv.org/abs/2002.05709. In Grill et al, "Bootstrap your own latent: A new approach to self-supervised learning," arXiv: 2006.07733, available at https://arxiv.org/abs/2006.07733 only positive pairs are used.

The encoder may be based upon a variational autoencoder e.g. it may comprise an encoder part of a variational autoencoder. In another example, the encoder may be based upon a ResNet architecture. In some other examples the encoder may be based on BYOL (arXiv:2006.07733), SimCLR (arXiv:2002.05709), or ReLIC (arXiv:2010.07922).

The parameters of the encoder may be held fixed. That is, the parameters of encoder may not be altered during the training and only the parameters of the plurality of neural networks are updated. This provides for a stable representation from which the subset of neural networks can be selected based upon the encoding of the training data item and allows for specialization of the neural networks according to the encoding of the training data item which may provide useful knowledge for the task associated with the training data item.

Each of the plurality of neural networks may be associated with a respective key. Selecting a subset of neural networks may be further based upon the respective keys. The method may further comprise determining a similarity between the encoding and each respective key; and selecting a subset of neural networks may be based upon the determined similarity. The similarity may be based upon a cosine distance between the encoding and the respective key. Thus, the k-nearest neighbors of keys to the encoding may be selected.

The respective keys may be generated by sampling a probability distribution based upon the embedding space represented by the encoder. That is, the keys may be vectors sampled from the embedding space represented by the encoder. In one example, the embedding space has dimensionality 512. In another example, the embedding space has dimensionality 2048. It will be appreciated the embedding space may have a dimensionality as considered appropriate by a person skilled in the art.

The probability distribution may be determined based upon a sample of encoded data. That is, the sample of encoded data may be generated by processing sample data items using the encoder to generate corresponding encodings for the sample data items. In one example, the number of sample data items is 256, although it will be appreciated that other numbers may be used. The sample data items may be drawn from a dataset different to the dataset that the training data item belongs to. The dataset for the sample data items may the same dataset for pre-training the encoder or a different dataset to both the pre-training data and the training data item dataset. The probability distribution may generated based upon the statistics of the sample encoded data. For example, the sample mean and variance may be determined for a Gaussian distribution. The may provide a more uniform distribution of keys across the encoder embedding space.

Processing the encoding of the training data item using the selected subset of neural networks may comprise processing the encoding through each respective neural network of the subset of neural networks to generate intermediate data for each respective neural network and aggregating the intermediate data for each respective neural network to generate the output data indicative of the classification of an aspect of the training data item. The intermediate data may be in the same form as the output data and the intermediate data may be the equivalent of the output data for one respective neural network.

Aggregating the intermediate data may comprise weighting the intermediate data for each respective neural network of the subset of neural networks. Where the neural networks are classifiers, aggregating the intermediate data may comprise weighting the intermediate data for each respective classifier of the subset of classifiers. For example, the aggregation may be a weighted sum. It will be appreciated that other forms of aggregation may be possible. The weighted sum may be normalized by the total sum of the weights.

The weighting may be based upon a similarity between a key associated with the neural network/classifier and the encoding of the training data item. That is, the weighting may be based upon the similarity between the key and the encoding of the training data item used that is used for selecting the subset of neural networks.

The plurality of neural networks may be neural network classifiers. The neural network classifiers may be single-layer classifiers. That is, the neural network classifier may have only an input layer and an output layer without any hidden layers. The neural network classifiers may comprise a neuron having a hyperbolic tangent activation function which may further comprise a scaling factor (scaled tanh function). The plurality of neural networks may be considered as an ensemble. In one example, the number of neural networks may be 1024, though as few as 16 may be used. The another example, the selected subset of neural networks may be 32, though other numbers may be used.

According to another aspect, there is provided a system comprising one or more computers and one or more storage devices storing instructions that when executed by the one or more computers cause the one or more computers to perform the operations of the respective training method described above.

According to a further aspect, there is provided one or more computer storage media storing instructions that when executed by one or more computers cause the one or more computers to perform the operations of the respective training method described above.

According to yet another aspect, there is provided a neural neural-based system comprising: a memory configured to store a plurality of neural networks and a key associated with each respective neural network; wherein the plurality of neural networks are each configured to process an encoding of a data item to generate output data indicative of a classification of an aspect of the data item. The system further comprises one or more computers and one or more storage devices storing instructions that when executed by the one or more computers cause the one or more computers to perform operations comprising: receiving a data item; processing the data item using an encoder to generate an encoding of the data item; selecting a subset of neural networks from the memory based upon a similarity between the encoding and the keys associated with each respective neural network; processing the encoding through each respective neural network of the selected subset of neural networks to generate intermediate data for each respective neural network; aggregating the intermediate data for each respective neural network to generate output data, wherein the aggregation comprises weighting the intermediate data for each respective neural network, the weighting based upon the similarity between the encoding and the key associated with the respective neural network; and outputting the output data; wherein the output data is indicative of a classification of an aspect of the data item.

It will be appreciated that features described in the context of one aspect may be combined with features described in the context of another aspect.

In some described examples the data items comprise images, but in general any type of data item may be processed. Some examples of different types of data item are described later. The method may be used to train neural network-based system for performing any type of task involving processing the same type of data item as used in the training, e.g. an image.

In the case of an image data item, which as used here includes a video data item, the tasks may include any sort of image processing or vision task such as an image classification or scene recognition task, an image segmentation task e.g. a semantic segmentation task, an object localization or detection task, a depth estimation task. When performing such a task the input may comprise or be derived from pixels of the image. For an image classification or scene recognition task the output may comprise a classification output providing a score for each of a plurality of image or scene categories e.g. representing an estimated likelihood that the input data item or an object or element of the input data item, or an action within a video data item, belongs to a category. For an image segmentation task the output may comprise, for each pixel, an assigned segmentation category or a probability that the pixel belongs to a segmentation category, e.g. to an object or action represented in the image or video. For an object localization or detection task the output may comprise data defining coordinates of a bounding box or region for one or more objects represented in the image. For a depth estimation task the output may comprise, for each pixel, an estimated depth value such that the output pixels define a (3D) depth map for the image. Such tasks may also contribute to higher level tasks e.g. object tracking across video frames; or gesture recognition i.e. recognition of gestures that are performed by entities depicted in a video.

Another example image processing task may include an image keypoint detection task in which the output comprises the coordinates of one or more image keypoints such as landmarks of an object represented in the image, e.g. a human pose estimation task in which the keypoints define the positions of body joints. A further example is an image similarity determination task, in which the output may comprise a value representing a similarity between two images, e.g. as part of an image search task.

The subject matter described in this specification can be implemented in particular embodiments so as to realize one or more of the following advantages

This specification describes a method for training a neural network-based system that is particularly advantageous in continual learning settings. In some prior art continual learning methods, knowledge of task structure and task boundaries are required for continual learning of new tasks or where the data distribution is non-stationary. In the present training method, knowledge of tasks and task boundaries are not required. A system trained using the present method can outperform current state-of-the-art systems on continual learning benchmarks by a large margin.

The particular training method also helps to mitigate against "catastrophic forgetting" where performance on earlier learned tasks degrades in favor of newer tasks. The provision of a plurality of neural networks and their selection according to an encoding of a data item allows for particular neural networks to specialize for handling certain tasks/data.

The training method is also particularly suited for an online learning setting whereby each training data item is seen only once or a limited number of times. The training method is therefore computational resource efficient and requires a reduced amount of time for training compared to conventional techniques.

### BRIEF DESCRIPTION OF THE DRAWINGS

FIG. 1 shows an example neural network training system;
FIG. 2 shows a schematic illustration of an example network training system;
FIG. 3 is a flowchart showing processing for training a neural network;
FIG. 4 is a flowchart showing processing for generating output data;
FIG. 5 shows six plots illustrating the performance of an exemplary neural network system over time using a continual learning protocol.

Like reference numbers and designations in the various drawings indicate like elements.

### DETAILED DESCRIPTION

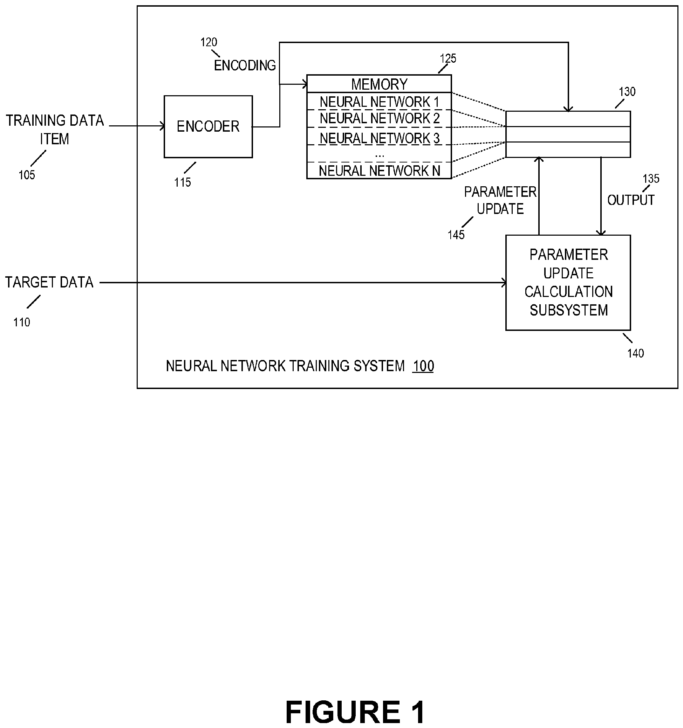

Figure 1 shows an example neural network training system 100 for training a plurality of neural networks. The system 100 may be implemented as one or more computer programs on one or more computers in one or more locations.

The system 100 is configured to receive a training data item 105 and target data 110 associated with the training data item 105. The target data 110 may provide the corresponding output that the neural network system is expected to produce in response to receiving and processing the training data item 105 by the system 100. The target data 110 may comprise data indicative of a classification of an aspect of the training data item 105. For example, the training data item 105 may comprise image data and the associated target data 110 may indicate a type of object that is present in the image data, and/or the target data 110 may indicate the location of an object in the image data, via a bounding box or a pixel-wise labelling for example, and/or the target data 110 may indicate the pose of an object. The training data item 105 may be video data item. The target data 110 may indicate an action being performed in the video data. The temporal location of the action in the video may also be indicated in the target data 110. The training data item 105 may be audio data, e.g. an audio signal or waveform. The target data 110 may provide an indication of the words spoken in the audio data and/or may provide an indication of the identity of a speaker in the audio signal. Further examples of the types of training data items are provided below.

The system 100 may retrieve the training data item 105 and target data 110 from a local data storage system or may receive the training data item 105 and target data 110 from a remote system.

The system 100 is configured to process the training data item 105 using an encoder 115 to generate an encoding 120 of the training data item 105. The encoder 115 may be a pre-trained neural network having any suitable neural network architecture, such as a variational autoencoder or a ResNet architecture. The encoder 115 may be pre-trained to generate a latent representation of an input data item. The encoder 115 may be pre-trained using a training dataset different to the dataset that the training data item 105 belongs to. The encoder 115 may be pre-trained using a self-supervised learning technique, for example, the training may be based upon transformed or "augmented" views of training data items. The pre-training of the encoder 115 is described in further detail below. The parameters of the encoder 115 when used in the system 100 may be held fixed, that is, the parameters of the encoder 115 are not updated by the system 100.

The system 100 further comprises a memory 125 configured to store a plurality of neural networks. Each of the neural networks stored in the memory 125 is configured to process the encoding 120 to generate output data indicative of a classification of an aspect of the training data item 105. The system 100 is configured to select a subset of neural networks 130 from the plurality of neural networks stored in the memory 125 using the encoding 120. For example, each of the plurality of neural networks may be associated with a respective key and the selection of a subset of neural networks 130 may be based upon the respective keys. A similarity, such as a cosine distance, between the encoding 120 and each respective key may be determined and selection of the subset of neural networks 130 may be based upon the determined similarity. For example, the neural networks associated with the *k* most similar keys to the encoding 120 may be selected as the subset of the neural networks 130. The respective keys and the encoding 120 may therefore reside in the same latent embedding space. The respective keys may be generated by sampling a probability distribution based upon the embedding space represented by the encoder 115 and the probability distribution may be determined based upon a sample of encoded data. The keys may be fixed and are not updated by the system 100 after generation. Further details with respect to the selection of the subset of neural networks is described in more detail below.

The system 100 is configured to process the encoding 120 using the selected subset of neural networks 130 to generate output data 135 corresponding to the training data item 105. For example, the encoding 120 may be processed through each respective neural network of the selected subset of neural networks 130 to generate intermediate data. The intermediate data may be in the same form as the output data and the intermediate data may be the equivalent of the output data for one respective neural network. For example, the intermediate data may be an initial classification provided by each respective neural network. The intermediate data may be aggregated to generate the output data 135. The aggregation may comprise weighting the intermediate data for each respective neural network of the subset of neural networks 130. For example, the aggregation may be a weighted sum, though it will be appreciated that other forms of aggregation may be used. Where a similarity between the encoding 120 and a respective key associated with a neural network has been determined, the weighting may be based upon the determined similarity. Further details with respect to the generation of the output data 135 is described below.

The system 100 is configured to determine an update 145 to the parameters of the selected subset of neural networks 130 based upon a loss function comprising a relationship between the generated output data 135 and the target data 110 associated with the training data item 105. As described in more detail below, the relationship between the generated output data 135 and the target data 110 in the loss function may be based upon a dot product between the generated output data 135 and the target data 110. The target data 110 may be in the form of a one-hot vector, that is, each element in the vector may represent a particular class and the element corresponding to the target class for the associated training data item may be set to one whilst all other elements are set to zero. A dot-product with a one-hot target vector would only produce a value for the correct target class. In this way, it possible to ensure that only the connections and the associated parameters in the neural network that contributes to the correct target class are updated. This helps to mitigate against catastrophic forgetting in online or continual learning settings as described below.

The update 145 may be determined by a parameter update calculation subsystem 140. The update 145 may be determined based upon a gradient for each parameter to be updated with respect to the loss function. The update 145 and the gradient may be computed using stochastic gradient descent or other appropriate optimization technique. In one example however, the update 145 is determined based upon the sign of the gradient and the magnitude is discarded. The determined sign of the gradient may be applied to a fixed step size to provide the update value 145.

The system 100 is configured to update the parameters of the selected subset of neural networks 130 based upon the determined update 145. Once updated, the neural networks may be written back to memory 125 if a copy of the selected subset of neural networks 130 was made rather than using the neural networks directly from the memory 125.

The system 100 may be configured to process additional training data items from a training dataset. The training data items may however be drawn different data distributions. That is, a first training data item is drawn from a first data distribution and a second training data item is drawn from a second data distribution. The different data distributions represent different tasks to be performed. The task gradually changes over time with a mix of training data items from a first task and a second task in the changeover. That is, the training dataset and the plurality of training data items comprise training data items drawn from the first data distribution interspersed with training data items drawn from the second data distribution. The change is implemented by drawing training data items associated with different data distributions/tasks/sub-tasks according to a particular probability distribution conditioned on training time. For example, training data items may be drawn from a first data distribution with a peak probability at time t1, training data items may be drawn from a second data distribution with a peak probability at time t2 and so on, with a temporal overlap in the probability distributions for selecting training data items from either of the first or second data distributions. The probability distributions may be Gaussian distributions.

The system 100 can provide effective learning without having to detect task boundaries or have knowledge of task boundaries or task structure. The system 100 can work effectively where the data distribution is non-stationary. In such continual learning settings, it is possible that systems can suffer from catastrophic forgetting, that is, the performance on earlier learned tasks may degrade when learning new tasks. The described techniques can mitigate against catastrophic forgetting. The system 100 may also be effective in online learning settings whereby each training data item in the training dataset is presented only once to the training system 100 or only a single pass through the training dataset is performed.

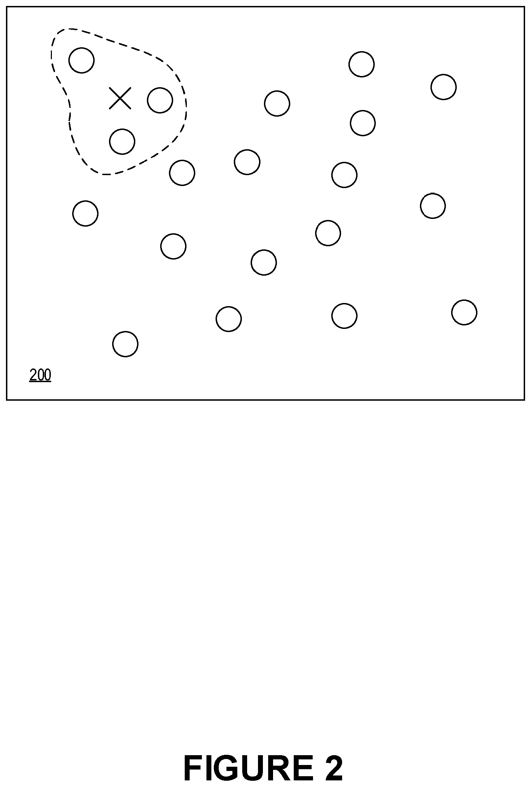

Referring now to Figure 2, there is shown a latent embedding space 200 in which an encoder, such as the encoder 115 of Figure 1, maps an input data item to. The latent embedding space 200 is depicted as two dimensional for visualization purposes, however, it will be appreciated that the latent embedding space 200 may have a greater number of dimensions. For example, in one implementation, the latent embedding space has 512 dimensions. **In** another implementation, the dimensionality is 2048. The dimensionality may be chosen as appropriate based upon the dimensionality of the input data item and the complexity of the tasks to be learned.

As discussed above, each of the neural networks in the memory 125 may be associated with a respective key with each key having a value in the latent embedding space 200. In Figure 2, each key is shown as a circle in the latent embedding space 200. A key may be generated based upon sampling a probability distribution over the latent embedding space 200. The probability distribution may be generated based upon encodings of sample training data, for example, the sample encodings may be used to determine the parameters of a Gaussian distribution. In another example, a uniform probability distribution may be generated based upon the range of possible values in the latent embedding space. By generating keys through random sampling, the keys may be distributed across the latent embedding space 200. In this way, each neural network of the plurality of neural networks may cover a particular region of the latent embedding space 200 and leverage any class-specific clustering produced by the encoder 115. Each neural network can be encouraged to specialize based upon the latent embedding space 200 and therefore each neural network may be of lower complexity and have fewer parameters than a network that covers the entire latent embedding space. In one example, each neural network is a single layer classifier. More formally, each classifier has a trainable weight matrix $W ∈ {ℝ}^{m \times d}$ where *m* is the number of output classes and *d* is the dimensionality of the latent embedding space 200. The classifier may also have a set of trainable biases, $b ∈ {ℝ}^{m}$. The encoder may be represented as: *z* = $f \left(x\right) ∈ {ℝ}^{d}$ where *x* is the input data item provided to the encoder which implements function *f* to provide the encoding *z.* Each classifier may take as input an encoding *z* and the output of each classifier may follow: $v \left(W, b, z\right) = \left[ϕ\left({ψ}_{1}\left(z\right)\right),…,ϕ\left({ψ}_{m}\left(z\right)\right)\right]$ where *v* is the output of the classifier, *ψᵢ*(*z*) = *wᵢ · Z^{T} + bᵢ* and *ϕ*(*x*) *= τ* tanh(*x*/*τ*) with *wᵢ* the *i-th* row of *W,* and the scaling factor *τ* is a hyper-parameter. In one example, *τ* is set to 250, however it will be appreciated that other values may be used as appropriate. The scaled tanh function enables the output of the neuron to grow close to *τ* without reaching it.

The memory 125 may be considered to comprise *n* pairs of keys and neural networks. For example, the memory 125 may be represented as *M =* (*M*_{key}, *M*_{cfier}) with ${M}_{key} ∈ {ℝ}^{n \times d}$ (i.e. *n* keys, each with dimensionality *d*) and ${M}_{cfier} ∈ \left({ℝ}^{n \times m \times d}, {ℝ}^{n \times m}\right)$ (i.e. *n* pairs of corresponding classifier weights and biases).

As discussed above, the subset of neural networks 130 may be selected based upon a similarity between the encoding 120 of the input data item and the respective keys associated with the plurality of neural networks stored in the memory 125. In one example, the similarity is based upon the cosine distance, however, any other suitable distance metric may be used such as Euclidean distance. As shown in Figure 2, the *k* nearest keys to the encoding 120 (shown as a cross in Figure 2) in the latent embedding space 200 according to the distance metric are determined and the neural networks associated with those keys are selected as the subset of neural networks 130. In Figure 2, *k* = 3 for illustrative purposes. Other values of *k* may be used as appropriate. In one example, *k* is set to 32 with 1024 neural networks in the memory 125.

As discussed above, the encoding 120 may be processed through each of the neural networks in the selected subset of neural networks 130. The overall output data 135 may be generated based upon a combination of the output of the individual neural networks of the selected subset 130. The output of each individual neural network is referred to herein as intermediate data and as discussed above, may take the same form as the overall output data 135. The intermediate data may be aggregated based upon a weighted sum with weightings based upon the similarity between the encoding 120 and the corresponding respective key. For example, the output data 135 may be generated according to the following: ${V}_{M} \left(z\right) = \frac{{\sum }_{i = 1}^{k} γ \left({M}_{key}^{J \left(i, z\right)}, z\right) v \left({W}^{J \left(i, z\right)}, {b}^{J \left(i, z\right)}, z\right)}{{\sum }_{i = 1}^{k} γ \left({M}_{key}^{J \left(i, z\right)}, z\right)}$ where *V_{M}*(*z*) is the output data 135, *γ*(*x, y*) is the distance metric, e.g. cosine distance, 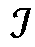 (*i, z*) is the index of *i-th* ranked key in *M*_{key} according to the determined similiarity and ${M}_{cfier}^{J \left(i, z\right)} = \left({W}^{J \left(i, z\right)}, {b}^{J \left(i, z\right)}\right)$ is the corresponding classifier to ${M}_{key}^{J \left(i, z\right)}$. Thus, the neural networks closest to the encoding 120 will have the highest weighting in the above formulation. The neural networks may be considered to function together as an ensemble system and can both specialize and co-operate.

As discussed above, an update 145 to the parameters of the selected subset of neural networks 130 may be computed based upon a loss function. The loss function may be based upon a dot product between the generated output data 135 and the target data 110 associated with the training data item 105. For example, the loss function may take the form: $L \left(y, \hat{y}\right) = - \left(y⋅\hat{y}\right)$ where *y* ∈ {0,1}*^{m}* is a one hot-encoding of the class to which the input training data item, *x,* belongs and *ŷ = V_{M}*(*f*(*x*)) is the output data, i.e. the predicted label for x generated by the system. In this formulation, there are no other normalization or softmax terms in the loss function and the loss function depends only on the raw dot product value.

As discussed above, the update 145 for a parameter of the subset of neural networks may be determined based upon a minimization of the loss function and a gradient for the parameter may be determined accordingly. Unlike conventional methods however, in one example, the update 145 is determined by applying the sign of the gradient to a fixed step size, e.g. the learning rate, and the magnitude of the gradient is not used. In one example, the learning rate is set to 0.0001.

As discussed above, the encoder 115 may take any suitable form. In one example, the encoder 115 is based upon a variational autoencoder. For example, where the input is an image, the encoder portion of the variational autoencoder may comprise two convolutional layers followed by two linear layers and a corresponding decoder portion with two linear layers followed by two transpose convolutional layers. After training the variational autoencoder, the weights of the encoder portion are frozen and can be used in the system 100. The decoder portion is not used and may be discarded. Further details with respect to variational autoencoders may be found in Kingma and Welling, "Auto-encoder variational bayes", arXiv: 1312.6114, available at https://arxiv.org/abs/1312.6114.

In another example, the encoder is based upon a ResNet architecture. The encoder may be trained using a self-supervised learning technique, in particular, a technique based upon contrastive learning such as ReLIC ("Representation learning via invariant causal mechanisms", arXiv: 2010.07922) and BYOL ("Bootstrap you own latent", arXiv: 2006.07733) may be used. In brief, the ReLIC technique is based upon instance discrimination. For a batch of training images, each image may be transformed or "augmented" to produce two views of the training image. Example augmentations may include one or more of: cropping, rotation, scaling, shearing, flip, colour distortion, modifications of brightness, contrast, saturation and hue. Each view may be processed by the encoder to generate an encoding. For a particular training image, the encoding of the first view of the particular training image may be compared against the encodings of the second views of all images in a batch. The training task is instance discrimination, i.e. to determine which of the second views matches the particular training image and which of the second views do not match the particular training image given the first view of the training image. This is repeated for the second view of the particular training image compared against the first views of the images in the batch. Two probability distributions may be constructed based upon the comparisons between the encodings, one for the first and second views comparison and one for the second and first views comparison. The parameters of the encoder may then be adjusted to minimize the error in the instance discrimination task subject to the two probability distributions being held similar. For example, a constraint that the Kullback-Leibler divergence between the two probability distributions is within a threshold may be used. In this way, the encoder may be (pre-)trained to generate useful representations (encodings) for other tasks. It will be appreciated that the above method for training an encoder may be applied to data items of other modalities such as audio with appropriate transforms. Further details with respect to ResNet architectures may be found in He et al., "Deep residual learning for image recognition", in Proceedings of the IEEE Conference on Computer Vision and Pattern Recognition (CVPR), pages 770-778, 2016.

The encoder 115 may be pre-trained using a dataset that is different to the dataset used in the system 100. For example, the encoder 115 may be pre-trained as a variational autoencoder on the Omniglot dataset and the system 100 may use the MNIST dataset. In another example, the encoder 115 may be pre-trained using ReLIC with a ResNet-50 encoder on the ImageNet dataset with the system 100 using CIFAR-10/100 datasets.

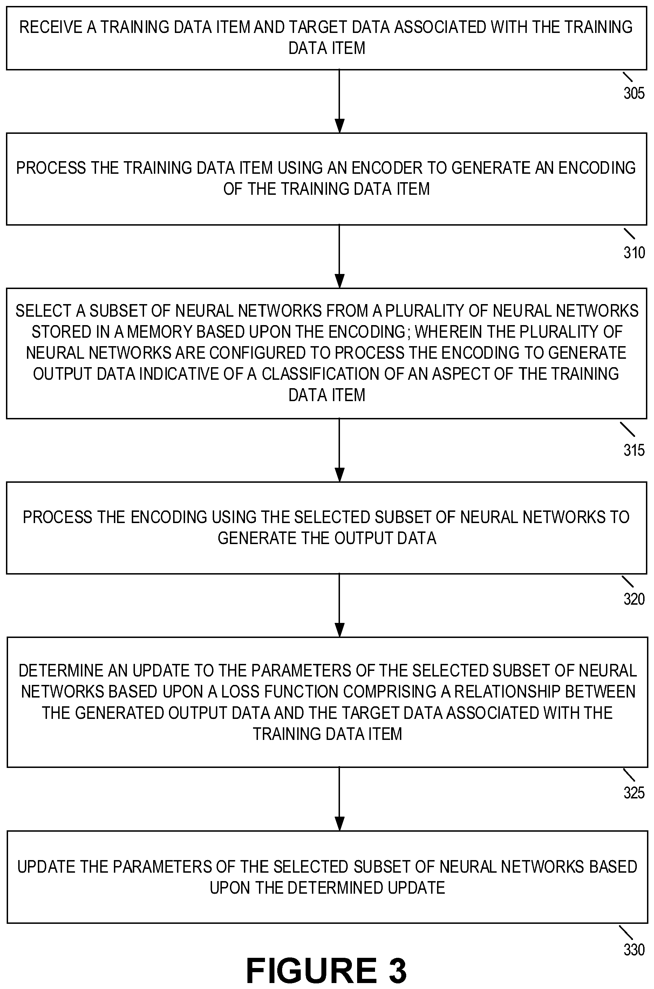

Referring now to Figure 3, processing for training a neural network-based system will now be described. The processing may be implemented using the system 100 of Figure 1.

At block 305, a training data item 105 and target data 110 associated with the training data item 105 is received. The target data 110 may be the corresponding output that the neural network system is expected to produce in response to receiving and processing the training data item 105. As discussed above, the training data item 105 may comprise image data, video data, audio data, data characterizing the state of an environment amongst others. The target data 110 may be indicative of a classification of an aspect of the training data item.

At block 310, the training data item 105 is processed using an encoder 115 to generate an encoding 120 of the training data item 105. The encoding 120 may be a latent representation of the training data item 105 and the encoder 115 may be pre-trained and held fixed as discussed above.

At block 315, a subset of neural networks 130 from a plurality of neural networks stored in a memory 125 is selected based upon the encoding 120. As discussed above, the plurality of neural networks are configured to process the encoding 120 to generate output data 135 indicative of a classification of an aspect of the training data item 105. Each neural network may be associated with a key and the selection of the subset of neural networks 130 may be based upon a similarity between the encoding 120 and each respective key as discussed above.

At block 320, the encoding 120 is processed using the selected subset of neural networks 130 to generate the output data 135. Each of the neural networks in the selected subset may generate intermediate data such as an initial classification and the intermediate data may be aggregated to generate the output data 135 as discussed above in further detail.

At block 325, an update 145 to the parameters of the selected subset of neural networks 130 is determined based upon a loss function comprising a relationship between the generated output data 135 and the target data 110 associated with the training data item 105. For example, a gradient for each parameter to be updated may be computed based upon an optimization of the loss function using stochastic gradient descent or other optimization method.

At block 330, the parameters of the selected subset of neural networks 130 are updated based upon the determined update 145. The update may be carried out according to the chosen optimization method. In one example however, the sign of a computed gradient is applied to a fixed step size, the magnitude of the computed gradient is not used.

The processing of Figure 3 may be repeated for further training data items. The processing may be used in online learning whereby each training data item is only provided to the system once or only a single pass is performed through a training dataset. The processing may also be used in continual learning settings where the data distribution of the training data items may change over time or where the system learns new tasks over time.

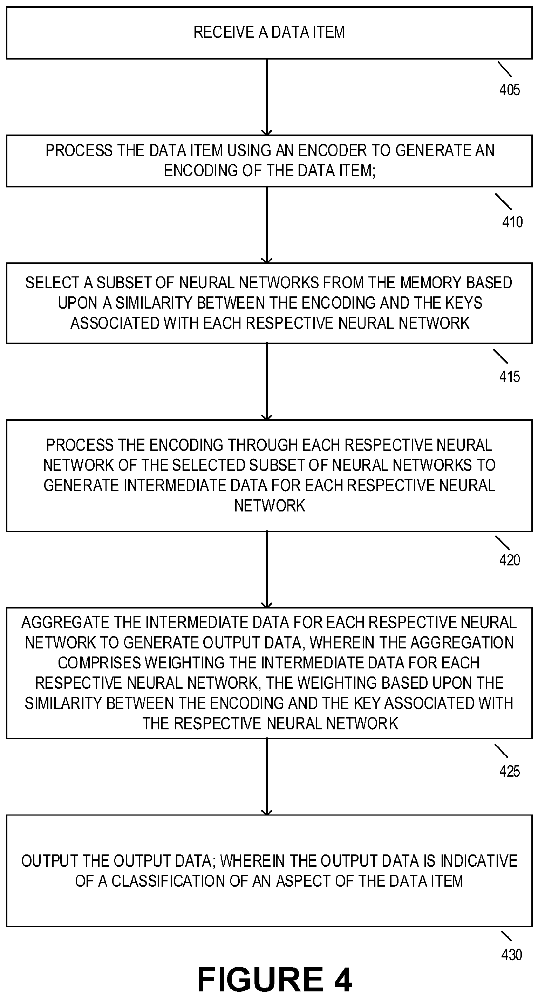

Referring now to Figure 4, processing is shown for generating output data from an input data item. The processing of Figure 4 may be implemented using the system 100 of Figure 1.

At block 405, a data item is received. The data item may be of the same form as a training data item 105.

At block 410, the data item is processed using an encoder 115 to generate an encoding of the data item.

At block 415, a subset of neural networks from the memory 125 is selected based upon a similarity between the encoding and the keys associated with each respective neural network. For example, the similarity may be based upon a cosine similarity. Further details with respect to the similarity and key generation are described above in the context of training data items but are equally applicable here.

At block 420, the encoding is processed through each respective neural network of the selected subset of neural networks to generate intermediate data for each respective neural network. As discussed above, the intermediate data may be an initial classification by each respective neural network in the selected subset.

At block 425, the intermediate data for each respective neural network are aggregated to generate output data. The aggregation comprises weighting the intermediate data for each respective neural network and the weighting is based upon the similarity between the encoding and the key associated with the respective neural network.

At block 430, the output data is provided as output. As discussed above, the output data is indicative of a classification of an aspect of the data item.

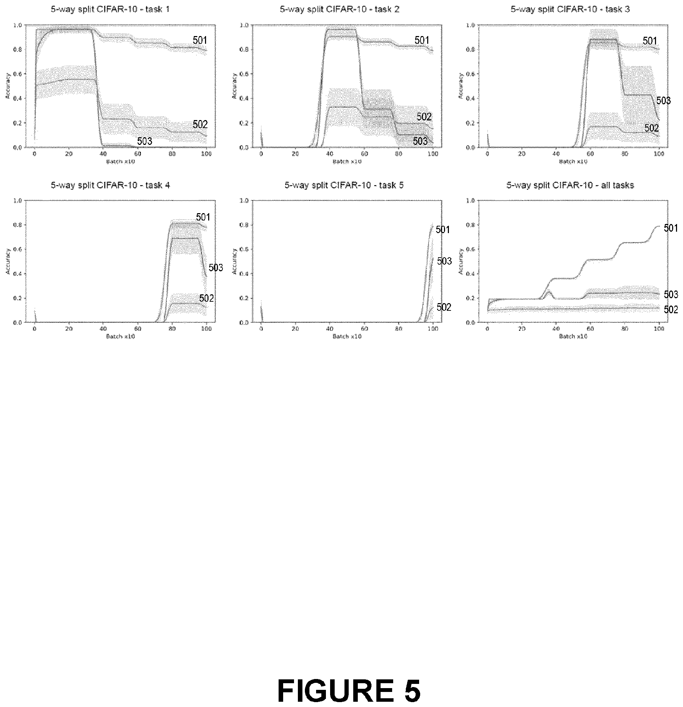

Referring now to Figure 5, six plots are provided illustrating the classification accuracy of an exemplary neural network system as training proceeds over time and trained according to the above described techniques. The system is trained using the CIFAR-10 dataset according to a continual learning protocol. In more detail, the ten classes to be recognized are divided into five subsets of two classes each to create five tasks. Each task is presented to the system one at a time. In this type of continual learning protocol, the aim is to be able to retain classification performance on earlier tasks whilst learning new tasks. Only one pass through the dataset is performed. As such, the data for earlier tasks is not seen again by the system.

Each plot shows the classification accuracy on each task as training proceeds over time. Task 1 is presented to the system first whilst task 5 is presented to the system last. As such, the accuracy on task 5 is very low until the task 5 data is presented to the system in the last phase of training. Whilst in task 1, accuracy is high at the beginning given that it is first task presented but falls-off as new tasks are learned and the task 1 data is not seen again. The final plot labelled "all tasks" shows the classification accuracy for all ten classes combined.

In each plot, the line labelled 501 corresponds to the performance of the exemplary system trained using the techniques described above. The line labelled 502 corresponds to the performance of a system comprising a single classifier only using a tanh activation function combined with the same encoder as the exemplary system for line 501. The line labelled 503 corresponds to the performance of system comprising a single softmax classifier only combined with the same encoder. The encoder is pre-trained using the ImageNet dataset.

As can be seen from the plots, the exemplary system corresponding to line 501 is able to maintain classification accuracy on earlier tasks whilst learning new tasks. For the tanh classifier 502 and the softmax classifier 503, performance degrades significantly, exhibiting signs of catastrophic forgetting. As such, a system trained according to the techniques described herein is able to mitigate against catastrophic forgetting.

Further examples of inputs (either data items or training data items) to the system 100 and types of tasks that the system 100 may perform will now be described.

The neural network-based system can be configured to receive any kind of digital data input (as the data item) and to generate any kind of score, classification, or regression output based on the input.

For example, if the inputs to the neural network-based system are images or features that have been extracted from images, the output generated by the neural network-based system for a given image may be scores for each of a set of object categories, with each score representing an estimated likelihood that the image contains an image of an object belonging to the category.

As another example, if the input to the neural network-based system is a sequence representing a spoken utterance, the output generated by the neural network may be a score for each of a set of pieces of text, each score representing an estimated likelihood that the piece of text is the correct transcript for the utterance. As another example, if the input to the neural network-based system is a sequence representing a spoken utterance, the output generated by the neural network-based system can indicate whether a particular word or phrase ("hotword") was spoken in the utterance. As another example, if the input to the neural network-based system is a sequence representing a spoken utterance, the output generated by the neural network-based system can identify the natural language in which the utterance was spoken. Thus in general the network input may comprise audio data for performing an audio processing task and the network output may provide a result of the audio processing task e.g. to identify a word or phrase or to convert the audio to text.

As another example, the task can be a health prediction task, where the input is a sequence derived from electronic health record data for a patient and the output is a prediction that is relevant to the future health of the patient, e.g., a predicted treatment that should be prescribed to the patient, the likelihood that an adverse health event will occur to the patient, or a predicted diagnosis for the patient.

As another example, if the input to the neural network-based system is a sequence of text in one language, the output generated by the neural network may be a score for each of a set of pieces of text in another language, with each score representing an estimated likelihood that the piece of text in the other language is a proper translation of the input text into the other language.

As another example, if the inputs to the neural network-based system are Internet resources (e.g., web pages), documents, or portions of documents or features extracted from Internet resources, documents, or portions of documents, the output generated by the neural network for a given Internet resource, document, or portion of a document may be a score for each of a set of topics, with each score representing an estimated likelihood that the Internet resource, document, or document portion is about the topic.

As another example, if the inputs to the neural network-based system are features of an impression context for a particular advertisement, the output generated by the neural network may be a score that represents an estimated likelihood that the particular advertisement will be clicked on.

As another example, if the inputs to the neural network-based system are features of a personalized recommendation for a user, e.g., features characterizing the context for the recommendation, e.g., features characterizing previous actions taken by the user, the output generated by the neural network may be a score for each of a set of content items, with each score representing an estimated likelihood that the user will respond favorably to being recommended the content item.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A computer-implemented method for training a neural network-based system, the method comprising:
(a) receiving a training data item (105) and target data (110) associated with the training data item;
(b) processing the training data item using an encoder (115) to generate an encoding (120) of the training data item in a latent embedding space (200) of the encoder (115);
(c) selecting a subset of neural networks (130) from a plurality of neural networks stored in a memory (125) using the encoding, wherein each of the plurality of neural networks is associated with a respective vector in the latent embedding space (200), and wherein selecting the subset using the encoding comprises determining a similarity between the encoding and each respective vector associated with one of the plurality of neural networks and selecting the subset based on the determined similarity; wherein the plurality of neural networks are configured to process the encoding to generate output data (135) indicative of a classification of an aspect of the training data item;
(d) processing the encoding using the selected subset of neural networks (130) to generate the output data;
(e) determining an update to the parameters of the selected subset of neural networks based upon a loss function dependent on the generated output data and the target data associated with the training data item; and
(f) updating the parameters of the selected subset of neural networks based upon the determined update;
further comprising repeating steps (a) to (f) for a plurality of training data items; wherein the plurality of training data items comprises first training data items drawn from a first data distribution associated with a first task interspersed with second training data items drawn from a second data distribution associated with a second task, wherein the first and second data distributions are different, and wherein there is a change in a distribution of the training data items corresponding to a change in the task the system is trained to perform with a mix of training data items from the first task and the second task in the changeover, wherein the change in a distribution of the training data items is conditioned on training time, and comprises training data items drawn from the first data distribution with a first probability and training data items drawn from the second data distribution with a second probability, with a temporal overlap in the probability distributions for selecting training data items from either of the first or second data distributions, and wherein
i) the training data item comprises image data for pixels of an image, and the target data and the output data indicate a type of object that is present in the image data and/or the location of an object in the image data and/or the pose of an object in the image data; or
i) the training data item comprises video data for pixels of video images, and the target data and the output data indicate an action being performed in the video data; or
iii) the training data item comprises audio data for an audio signal and the target data and the output data provides an indication of words spoken in the audio signal and/or an indication of the identity of a speaker in the audio signal.

2. The method of claim 1, wherein the encoder is pre-trained, and wherein during the training the parameters of the encoder are held fixed and only the parameters of the plurality of neural networks are updated.

3. The method of claim 1 or 2, wherein the loss function dependent on the generated output data and the target data for the training data item comprises a dot product between the generated output data and the target data.

4. The method of any preceding claim, wherein the target data is in the form of a one-hot vector.

5. The method of any preceding claim, wherein the encoder is pre-trained using a self-supervised learning technique.

6. The method of claim 5, wherein the self-supervised learning technique comprises training based upon transformed views of training data items.

7. The method of any of claims 1-6, wherein the encoder is based upon a variational autoencoder.

8. The method any of claims 1-6, wherein the encoder is based upon a ResNet architecture.

9. The method of any preceding claim, wherein processing the encoding of the training data item using the selected subset of neural networks comprises processing the encoding through each respective neural network of the subset of neural networks to generate intermediate data for each respective neural network; and aggregating the intermediate data for each respective neural network to generate the output data indicative of the classification of an aspect of the training data item.

10. The method of claim 9, wherein aggregating the intermediate data comprises weighting the intermediate data for each respective neural network of the subset of neural networks.

11. The method of any preceding claim, wherein the plurality of neural networks are neural network classifiers.

12. The method of claim 11, wherein the neural network classifiers comprise a neuron having a hyperbolic tangent activation function.

13. A system comprising one or more computers and one or more storage devices storing instructions that when executed by the one or more computers cause the one or more computers to perform the operations of the respective method of any one of claims 1-12.

14. One or more computer storage media storing instructions that when executed by one or more computers cause the one or more computers to perform the operations of the respective method of any one of claims 1-12.

## Patentansprüche

1. Computerimplementiertes Verfahren zum Trainieren eines auf einem neuronalen Netzwerk basierenden Systems, wobei das Verfahren Folgendes umfasst:
(a) Empfangen eines Trainingsdatenelements (105) und von Zieldaten (110), die mit dem Trainingsdatenelement verknüpft sind;
(b) Verarbeiten des Trainingsdatenelements unter Verwendung eines Codierers (115), um eine Codierung (120) des Trainingsdatenelements in einem latenten Einbettungsraum (200) des Codierers (115) zu generieren;
(c) Auswählen einer Teilmenge von neuronalen Netzwerken (130) aus einer Mehrzahl von neuronalen Netzwerken, die in einem Speicher (125) gespeichert ist, unter Verwendung der Codierung, wobei jedes der Mehrzahl von neuronalen Netzwerken mit einem jeweiligen Vektor in dem latenten Einbettungsraum (200) verknüpft ist und wobei das Auswählen der Teilmenge unter Verwendung der Codierung Bestimmen einer Ähnlichkeit zwischen der Codierung und jedem jeweiligen Vektor, der mit einem der Mehrzahl von neuronalen Netzwerken verknüpft ist, und Auswählen der Teilmenge basierend auf der bestimmen Ähnlichkeit umfasst; wobei die Mehrzahl von neuronalen Netzwerken konfiguriert ist, um die Codierung zu verarbeiten, um Ausgabedaten (135) zu generieren, die eine Klassifizierung eines Aspekts des Trainingsdatenelements angeben;
(d) Verarbeiten der Codierung unter Verwendung der ausgewählten Teilmenge von neuronalen Netzwerken (130), um die Ausgabedaten zu generieren;
(e) Bestimmen einer Aktualisierung der Parameter der ausgewählten Teilmenge von neuronalen Netzwerken basierend auf einer Verlustfunktion, die von den generierten Ausgabedaten und den mit dem Trainingsdatenelement verknüpften Zieldaten abhängt; und
(f) Aktualisieren der Parameter der ausgewählten Teilmenge von neuronalen Netzwerken basierend auf der bestimmten Aktualisierung;
ferner umfassend Wiederholen der Schritte (a) bis (f) für eine Mehrzahl von Trainingsdatenelementen; wobei die Mehrzahl von Trainingsdatenelementen erste Trainingsdatenelemente, entnommen aus einer ersten Datenverteilung, die mit einer ersten Aufgabe verknüpft ist, vermischt mit zweiten Trainingsdatenelementen, entnommen aus einer zweiten Datenverteilung, die mit einer zweiten Aufgabe verknüpft ist, umfasst, wobei sich die erste und die zweite Datenverteilung unterscheiden und wobei sich eine Verteilung der Trainingsdatenelemente entsprechend einer Änderung der Aufgabe ändert, für deren Durchführung das System trainiert wird, mit einer Mischung aus Trainingsdatenelementen der ersten und der zweiten Aufgabe bei dem Wechsel, wobei die Änderung der Verteilung der Trainingsdatenelemente von der Trainingszeit abhängt, und Trainingsdatenelemente, entnommen aus der ersten Datenverteilung mit einer ersten Wahrscheinlichkeit, und Trainingsdatenelemente, entnommen aus der zweiten Datenverteilung mit einer zweiten Wahrscheinlichkeit, umfasst, wobei sich die Wahrscheinlichkeitsverteilungen zum Auswählen von Trainingsdatenelementen aus entweder der ersten oder der zweiten Datenverteilung zeitlich überschneiden, und wobei
i) das Trainingsdatenelement Bilddaten für Pixel eines Bildes umfasst und die Zieldaten und die Ausgabedaten eine Art eines Objekts, das in den Bilddaten vorhanden ist, und/oder den Standort eines Objekts in den Bilddaten und/oder die Stellung eines Objekts in den Bilddaten angeben; oder
ii) das Trainingsdatenelement Videodaten für Pixel von Videobildern umfasst und die Zieldaten und die Ausgabedaten eine Aktion, die in den Videodaten durchgeführt wird, angeben; oder
iii) das Trainingsdatenelement Audiodaten für ein Audiosignal umfasst und die Zieldaten und die Ausgabedaten eine Angabe der in dem Audiosignal gesprochenen Wörter und/oder eine Angabe der Identität eines Sprechers in dem Audiosignal bereitstellen.

2. Verfahren nach Anspruch 1, wobei der Codierer vortrainiert ist und wobei während des Trainings die Parameter des Codierers festgelegt bleiben und nur die Parameter der Mehrzahl von neuronalen Netzwerken aktualisiert werden.

3. Verfahren nach Anspruch 1 oder 2, wobei die von den generierten Ausgabedaten und den Zieldaten abhängige Verlustfunktion für das Trainingsdatenelement ein Punktprodukt zwischen den generierten Ausgabedaten und den Zieldaten umfasst.

4. Verfahren nach einem der vorhergehenden Ansprüche, wobei die Zieldaten in der Form eines One-Hot-Vektors vorliegen.

5. Verfahren nach einem der vorhergehenden Ansprüche, wobei der Codierer unter Verwendung einer selbstüberwachten Lerntechnik vortrainiert wird.

6. Verfahren nach Anspruch 5, wobei die selbstüberwachte Lerntechnik ein Training basierend auf transformierten Ansichten von Trainingsdatenelementen umfasst.

7. Verfahren nach einem der Ansprüche 1-6, wobei der Codierer auf einem Variational Autoencoder basiert.

8. Verfahren nach einem der Ansprüche 1-6, wobei der Codierer auf einer ResNet-Architektur basiert.

9. Verfahren nach einem der vorhergehenden Ansprüche, wobei das Verarbeiten der Codierung des Trainingsdatenelements unter Verwendung der ausgewählten Teilmenge von neuronalen Netzwerken Verarbeiten der Codierung durch jedes jeweilige neuronale Netzwerk der Teilmenge von neuronalen Netzwerken, um Zwischendaten für jedes jeweilige neuronale Netzwerk zu generieren; und Aggregieren der Zwischendaten für jedes jeweilige neuronale Netzwerk, um die Ausgabedaten zu generieren, welche die Klassifizierung eines Aspekts des Trainingsdatenelements angeben, umfasst.

10. Verfahren nach Anspruch 9, wobei das Aggregieren der Zwischendaten Gewichten der Zwischendaten für jedes jeweilige neuronale Netzwerk der Teilmenge von neuronalen Netzwerken umfasst.

11. Verfahren nach einem der vorhergehenden Ansprüche, wobei die Mehrzahl von neuronalen Netzwerken neuronale Netzwerkklassifizierer sind.

12. Verfahren nach Anspruch 11, wobei die neuronalen Netzwerkklassifizierer ein Neuron umfassen, das eine hyperbolische tangentiale Aktivierungsfunktion aufweist.

13. System, umfassend einen oder mehrere Computer und eine oder mehrere Speichervorrichtungen, die Anweisungen speichern, die bei Ausführung durch den einen oder die mehreren Computer den einen oder die mehreren Computer veranlassen, die Operationen des jeweiligen Verfahrens nach einem der Ansprüche 1-12 durchzuführen.

14. Ein oder mehrere Computerspeichermedien, die Anweisungen speichern, die bei Ausführung durch einen oder mehrere Computer den einen oder die mehreren Computer veranlassen, die Operationen des jeweiligen Verfahrens nach einem der Ansprüche 1-12 durchzuführen.

## Revendications

1. Procédé mis en œuvre par ordinateur pour entraîner un système basé sur un réseau neuronal, le procédé comprenant :
(a) la réception d'un élément de données d'entraînement (105) et de données cibles (110) associées à l'élément de données d'entraînement ;
(b) le traitement de l'élément de données d'entraînement à l'aide d'un encodeur (115) pour générer un encodage (120) de l'élément de données d'entraînement dans un espace d'intégration latent (200) de l'encodeur (115) ;
(c) la sélection d'un sous-ensemble de réseaux neuronaux (130) à partir d'une pluralité de réseaux neuronaux stockés dans une mémoire (125) à l'aide de l'encodage, dans lequel chacun de la pluralité de réseaux neuronaux est associé à un vecteur respectif dans l'espace d'intégration latent (200), et dans lequel la sélection du sous-ensemble à l'aide de l'encodage comprend la détermination d'une similarité entre l'encodage et chaque vecteur respectif associé à l'un de la pluralité de réseaux neuronaux et la sélection du sous-ensemble sur la base de la similarité déterminée ; dans lequel la pluralité de réseaux neuronaux sont configurés pour traiter l'encodage afin de générer des données de sortie (135) indiquant une classification d'un aspect de l'élément de données d'entraînement ;
(d) le traitement de l'encodage à l'aide du sous-ensemble sélectionné de réseaux neuronaux (130) pour générer les données de sortie ;
(e) la détermination d'une mise à jour des paramètres du sous-ensemble sélectionné de réseaux neuronaux sur la base d'une fonction de perte dépendant des données de sortie générées et des données cibles associées à l'élément de données d'entraînement ; et
(f) la mise à jour des paramètres du sous-ensemble sélectionné de réseaux neuronaux sur la base de la mise à jour déterminée ; comprenant en outre la répétition des étapes (a) à (f) pour une pluralité d'éléments de données d'entraînement ; dans lequel la pluralité d'éléments de données d'entraînement comprend des premiers éléments de données d'entraînement tirés d'une première distribution de données associée à une première tâche intercalés avec des seconds éléments de données d'entraînement tirés d'une seconde distribution de données associée à une seconde tâche, dans lequel les première et seconde distributions de données sont différentes, et dans lequel il y a un changement dans une distribution des éléments de données d'entraînement correspondant à un changement dans la tâche que le système est entraîné à réaliser avec un mélange d'éléments de données d'entraînement provenant de la première tâche et de la seconde tâche lors du changement, dans lequel le changement dans une distribution des éléments de données d'entraînement est conditionné par le temps d'entraînement, et comprend des éléments de données d'entraînement tirés de la première distribution de données avec une première probabilité et des éléments de données d'entraînement
tirés de la seconde distribution de données avec une seconde probabilité, avec un chevauchement temporel des distributions de probabilité pour la sélection d'éléments de données d'entraînement à partir de l'une ou l'autre des première et seconde distributions de données, et dans lequel
i) l'élément de données d'entraînement comprend des données d'image pour des pixels d'une image, et les données cibles et les données de sortie indiquent un type d'objet qui est présent dans les données d'image et/ou l'emplacement d'un objet dans les données d'image et/ou la pose d'un objet dans les données d'image ; ou
ii) l'élément de données d'entraînement comprend des données vidéo pour des pixels d'images vidéo, et les données cibles et les données de sortie indiquent une action étant réalisée dans les données vidéo ; ou
iii) l'élément de données d'entraînement comprend des données audio pour un signal audio et les données cibles et les données de sortie fournissent une indication des mots prononcés dans le signal audio et/ou une indication de l'identité d'un locuteur dans le signal audio.

2. Procédé selon la revendication 1, dans lequel l'encodeur est pré-entraîné, et dans lequel, pendant l'entraînement, les paramètres de l'encodeur sont maintenus fixes et seuls les paramètres de la pluralité de réseaux neuronaux sont mis à jour.

3. Procédé selon la revendication 1 ou 2, dans lequel la fonction de perte dépendant des données de sortie générées et des données cibles pour l'élément de données d'entraînement comprend un produit scalaire entre les données de sortie générées et les données cibles.

4. Procédé selon une quelconque revendication précédente, dans lequel les données cibles se présentent sous la forme d'un vecteur one-hot.

5. Procédé selon une quelconque revendication précédente, dans lequel l'encodeur est pré-entraîné à l'aide d'une technique d'apprentissage auto-supervisé.

6. Procédé selon la revendication 5, dans lequel la technique d'apprentissage auto-supervisé comprend un entraînement sur la base de vues transformées d'éléments de données d'entraînement.

7. Procédé selon l'une quelconque des revendications 1 à 6, dans lequel l'encodeur est basé sur un auto-encodeur variationnel.

8. Procédé selon l'une quelconque des revendications 1 à 6, dans lequel l'encodeur est basé sur une architecture ResNet.

9. Procédé selon une quelconque revendication précédente, dans lequel le traitement de l'encodage de l'élément de données d'entraînement à l'aide du sous-ensemble sélectionné de réseaux neuronaux comprend le traitement de l'encodage à travers chaque réseau neuronal respectif du sous-ensemble de réseaux neuronaux pour générer des données intermédiaires pour chaque réseau neuronal respectif ; et l'agrégation des données intermédiaires pour chaque réseau neuronal respectif pour générer les données de sortie indicatives de la classification d'un aspect de l'élément de données d'entraînement.

10. Procédé selon la revendication 9, dans lequel l'agrégation des données intermédiaires comprend la pondération des données intermédiaires pour chaque réseau neuronal respectif du sous-ensemble de réseaux neuronaux.

11. Procédé selon une quelconque revendication précédente, dans lequel la pluralité de réseaux neuronaux sont des classificateurs de réseaux neuronaux.

12. Procédé selon la revendication 11, dans lequel les classificateurs de réseaux neuronaux comprennent un neurone présentant une fonction d'activation de tangente hyperbolique.

13. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 12.

14. Un ou plusieurs supports de stockage informatique stockant des instructions qui, lorsqu'elles sont exécutées par un ou plusieurs ordinateurs, amènent les un ou plusieurs ordinateurs à réaliser les opérations du procédé respectif selon l'une quelconque des revendications 1 à 12.
